(19) **Europäisches Patentamt / European Patent Office / Office européen des brevets**

(11) **EP 4 722 294 A1**

(12) **EUROPEAN PATENT APPLICATION**
published in accordance with Art. 153(4) EPC

(43) Date of publication:
**08.04.2026 Bulletin 2026/15**

(21) Application number: **24815471.8**

(22) Date of filing: **28.05.2024**

(51) International Patent Classification (IPC):
**C08L 67/00** (2006.01)     **B32B 27/36** (2006.01)
**C08G 63/183** (2006.01)    **C08K 3/013** (2018.01)

(52) Cooperative Patent Classification (CPC):
**B32B 27/36; C08G 63/183; C08K 3/013; C08L 67/00**

(86) International application number:
**PCT/JP2024/019503**

(87) International publication number:
**WO 2024/247988 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.05.2023 JP 2023087866**

(71) Applicant: **Mitsubishi Chemical Corporation Tokyo 100-8251 (JP)**

(72) Inventors:
• **MURAKAMI, Ryo**
  **Tokyo 100-8251 (JP)**
• **YASUI, Koji**
  **Tokyo 100-8251 (JP)**

(74) Representative: **Vossius & Partner Patentanwälte Rechtsanwälte mbB Siebertstraße 3 81675 München (DE)**

(54) **BIODEGRADABLE RESIN COMPOSITION, MOLDED BODY, AND MULTILAYER BODY**

(57)     An object of the present invention is to provide a biodegradable resin composition from which a molded body unlikely to be colored with a dye contained in a food or beverage can be produced. Provided is a biodegradable resin composition containing an aliphatic-aromatic polyester and a filler, in which the content ratio of the aliphatic-aromatic polyester with respect to the biodegradable resin composition is 20% by mass to 99% by mass, the content ratio of the filler with respect to the biodegradable resin composition is 0.3% by mass to 50.0% by mass, and the content of ester groups in the aliphatic-aromatic polyester is 9.6 mol/kg or more.

Fig. 1

DSC (cooling)

EP 4 722 294 A1

**Description**

TECHNICAL FIELD

The present invention relates to a biodegradable resin composition, a molded body, and a multilayer body.

BACKGROUND ART

Paper cups have been widely used as disposable beverage packaging materials. The surface of the paper used in paper cups is generally laminated with a non-biodegradable resin such as polyethylene for the purpose of preventing the penetration and leakage of beverages. Thus, paper cups after use are usually incinerated and, if released into the environment, their resin layers remain in the environment semi-permanently. In addition to paper cups, various disposable food and beverage packaging materials made of plastics are used, presenting problems from the standpoint of environmental pollution and resource conservation.

The use of biodegradable resins in these packaging materials is beneficial for the environmental protection not only because it allows the packaging materials to be composted along with the residues and the like of foods and beverages without separation, but also because such packaging materials are biologically degraded even if they are released into the environment.

Aliphatic-aromatic polyesters such as polybutylene adipate terephthalate (PBAT) are widely used as biodegradable polyester resins having flexibility, breaking strength, good moldability, and the like that are similar to those of polyethylene. The technologies relating to aliphatic-aromatic polyesters as well as the technologies for coating a paper with a coating agent containing an aliphatic-aromatic polyester have been extensively developed.

For example, Patent Document 1 discloses a technology for obtaining an aliphatic-aromatic polyester resin which is excellent in thermal stability, molding stability, and mechanical properties, and in which an aliphatic dicarboxylic acid unit, an aromatic dicarboxylic acid unit, and an aliphatic diol unit and/or an alicyclic diol unit constitute main structural units, by controlling the abundance ratio (molar ratio) of the aliphatic dicarboxylic acid unit and the aromatic dicarboxylic acid unit to be in a specific range, allowing the resin to have a specific glass transition temperature, and incorporating a specific branched structure.

Further, Patent Document 2 discloses a technology for obtaining a coating agent which is excellent in fluidity and adhesion and with which a sheet of paper can be suitably coated, by incorporating an aliphatic-aromatic polyester having a specific melt volume flow rate (MVR) and specific other components.

PRIOR ART DOCUMENTS

PATENT DOCUMENTS

Patent Document 1: WO2022/014434A1
Patent Document 2: JP2012-504195A

SUMMARY OF THE INVENTION

TECHNICAL PROBLEM

As described above, it is known to use an aliphatic-aromatic polyester in a food or beverage packaging material; however, when an aliphatic-aromatic polyester is used in a packaging material of a food or beverage, there is a problem that the packaging material is easily colored with a dye contained in the food or beverage and, therefore, there is room for improvement.

In view of this, the present invention is intended to solve the above-described problem, and an object of one aspect of the present invention is to provide: a biodegradable resin composition which uses an aliphatic-aromatic polyester, and from which a molded body unlikely to be colored with a dye contained in a food or beverage can be produced; and a molded body and a multilayer body (hereinafter, may be referred to as "molded body and the like") which are unlikely to be colored with a dye contained in a food or beverage.

An object of another aspect of the present invention is to provide: a biodegradable resin composition which can yield a molded body that is unlikely to be colored with a dye contained in a food or beverage and has excellent mouth-opening property; and a molded body and the like and a multilayer body which are unlikely to be colored with a dye contained in a food or beverage and have excellent mouth-opening property.

SOLUTION TO PROBLEM

The present inventors studied the above-described problems and consequently discovered that the problems can be solved by using an aliphatic-aromatic polyester having an ester group content in a specific range, thereby completing the present invention.

That is, the gist of the present invention resides in the following.

[1] A biodegradable resin composition, comprising an aliphatic-aromatic polyester and a filler,

wherein the content ratio of the aliphatic-aromatic polyester with respect to the biodegradable resin composition is 20% by mass to 99% by mass,
the content ratio of the filler with respect to the biodegradable resin composition is 0.3% by mass to 50.0% by mass, and
the content of ester groups in the aliphatic-aromatic polyester is 9.6 mol/kg or more.

[2] The biodegradable resin composition according to [1], wherein the aliphatic-aromatic polyester has a glass transition temperature in a range of -27 to 0°C.

[3] The biodegradable resin composition according to [1] or [2], containing at least a polybutylene succinate terephthalate as the aliphatic-aromatic polyester.

[4] The biodegradable resin composition according to [3], wherein the polybutylene succinate terephthalate has a bio-based carbon content of 50% or more as measured in accordance with ISO 16620-2.

[5] The biodegradable resin composition according to [3], wherein a ratio of terephthalic acid-derived structural units in all dicarboxylic acid-derived structural units contained in the aliphatic-aromatic polyester is 15 to 70% by mole.

[6] The biodegradable resin composition according to any one of [1] to [5], further containing an aliphatic polyester.

[7] The biodegradable resin composition according to any one of [1] to [6], having a bio-based carbon content of 20% or more as measured in accordance with ISO 16620-2.

[8] A molded body, formed of the biodegradable resin composition according to any one of [1] to [7].

[9] The molded body according to [8], which is a food or beverage packaging material.

[10] The molded body according to [9], wherein the food or beverage packaging material is a food or beverage container.

[11] A multilayer body, including:

a substrate; and
a layer formed of the biodegradable resin composition according to any one of [1] to [7].

[12] The multilayer body according to [11], which is a food or beverage packaging material.

[13] The multilayer body according to [12], wherein the food or beverage packaging material is a food or beverage container.

[14] A polybutylene succinate terephthalate, having an ester group content of 9.6 mol/kg or more, and a bio-based carbon content of 20% or more as measured in accordance with ISO 16620-2.

[15] The polybutylene succinate terephthalate according to [14], wherein the bio-based carbon content measured in accordance with ISO 16620-2 is 50% or more.

[16] A molded body, formed of the polybutylene succinate terephthalate according to [14] or [15].

[17] The molded body according to [16], which is a food or beverage packaging material.

[18] The molded body according to [17], wherein the food or beverage packaging material is a food or beverage container.

[19] A multilayer body, including:

a substrate; and
a layer formed of the polybutylene succinate terephthalate according to [14] or [15].

[20] The multilayer body according to [19], which is a food or beverage packaging material.

[21] The multilayer body according to [20], wherein the food or beverage packaging material is a food or beverage container.

ADVANTAGEOUS EFFECTS OF INVENTION

According to one aspect of the present invention, the following can be provided: a biodegradable resin composition which uses an aliphatic-aromatic polyester, and from which a molded body unlikely to be colored with a dye contained in a food or beverage can be produced; and a molded body and the like which are unlikely to be colored with a dye contained in a food or beverage.

Further, according to another aspect of the present invention, the following can be provided: a biodegradable resin composition which can yield a molded body that is unlikely to be colored with a dye contained in a food or beverage and has excellent mouth-opening property; and a molded body and the like and a multilayer body which are unlikely to be colored with a dye contained in a food or beverage and have excellent mouth-opening property.

BRIEF DESCRIPTION OF THE DRAWINGS

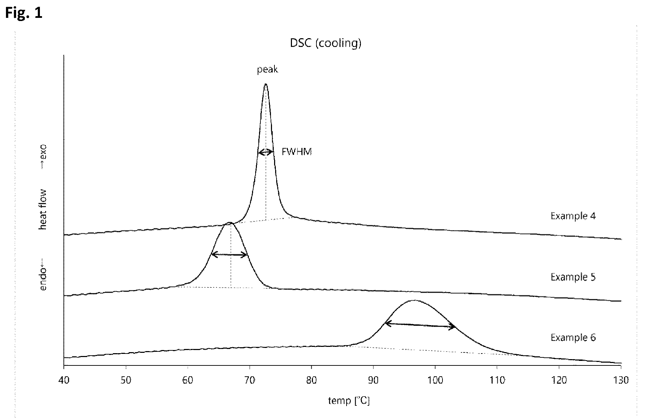

[FIG. 1] FIG. 1 is a graph showing the shapes of crystallization peaks in the cooling measurement performed in Examples 4 to 6 using a differential scanning calorimeter.

DETAILED DESCRIPTION OF THE INVENTION

The present invention is not limited to the following descriptions, and can be carried out with any modification without departing from the gist of the present invention. It is noted here that, in the present specification, those ranges that are stated with "to" before and after numerical or physical property values each denote a range that includes the respective values as lower and upper limit values that are end points. Where numerical ranges are described in a stepwise manner, the disclosure encompasses any combination of an upper limit and an lower limit of the numerical ranges.

In the present specification, "% by mass", "ppm by mass", and "parts by mass" have the same meaning as "% by weight", "ppm by weight", and "parts by weight", respectively.

In the present specification, the expression "A or B" can be paraphrased as "at least one selected from the group consisting of A and B".

Further, in the present specification, plural embodiments are described, and various conditions of each embodiment are applicable to other embodiments where appropriate.

Moreover, in the present specification, a structural unit derived from A is also referred to as "A unit".

<Biodegradable Resin Composition>

The biodegradable resin composition according to one embodiment of the present invention (hereinafter, may be simply referred to as "composition") contains an aliphatic-aromatic polyester and a filler. The aliphatic-aromatic polyester is contained in a ratio of 20% by mass to 99% by mass, and the filler is contained in a ratio of 0.3% by mass to 50.0% by mass, with respect to the composition. Further, the content of ester groups in the aliphatic-aromatic polyester is 9.6 mol/kg or more.

Conventionally, when an aliphatic-aromatic polyester is used in a packaging material of a food or beverage, there is a problem that the packaging material is easily colored with a dye contained in the food or beverage.

In this respect, the aliphatic-aromatic polyester is usually a semi-crystalline resin, and has a crystalline moiety and an amorphous moiety. The amorphous moiety has a large free volume between polymer chains, and the present inventors presumed that a dye contained in a food or beverage enters and penetrates into this free volume, causing coloring. Further, the present inventors considered that the penetration of dye molecules can be inhibited when hydrogen bonds are formed between adjacent polymer chains by the ester groups contained in the aliphatic-aromatic polyester and, as a result of intensive studies, the present inventors discovered that the above-described coloring problem can be solved by the above-described composition in which the content of ester groups in the aliphatic-aromatic polyester is increased to a desired value or more.

The composition according to the present embodiment will now be described in detail.

[Constitution of Aliphatic-Aromatic Polyester]

The aliphatic-aromatic polyester (hereinafter, may be simply referred to as "polyester") is a polyester that contains an aliphatic dicarboxylic acid unit, an aromatic dicarboxylic acid unit, and an aliphatic diol unit as main structural units.

The aliphatic-aromatic polyester may also have a structural unit other than the above-described diol unit and dicarboxylic acid units.

An aromatic compound unit may contain an aromatic dicarboxylic acid unit, and can also contain an aromatic diol unit.

The aliphatic-aromatic polyester may be used singly, or in combination of two or more kinds thereof.

In the present specification, the "main structural units" in the aliphatic-aromatic polyester usually refer to structural units that are contained in a total amount of 80% by mole or more in 100% by mole of all structural units constituting the aliphatic-aromatic polyester, and there are cases where no structural unit other than the main structural units is contained at all.

The constitution of the aliphatic-aromatic polyester can be identified by $^1$H-NMR, pyrolysis gas chromatography, or the like.

(Diol)

The types of diols giving diol units are specifically enumerated below, and at least one kind of aliphatic-aromatic polyester may contain a structural unit derived from any of the below-enumerated diols.

As a diol giving a diol unit, any diol that is usually used as a raw material of a polyester can be used with no particular limitation. As the diol, at least an aliphatic diol is used, and an aromatic diol may be used as well.

The diol may have a straight-chain structure, a branched-chain structure, or a ring structure.

The number of carbon atoms of the aliphatic diol is not particularly limited; however, it is usually 2 to 20 and, from the standpoint of moldability and mechanical strength as well as from the standpoint of controlling the ester group content to be in a desired range, the number of carbon atoms of the aliphatic diol is preferably 2 to 12, more preferably 2 to 6, and particularly preferably 2 to 4.

Examples of the aliphatic diol include: alkylene diols, such as ethylene glycol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, and neopentyl glycol; oxyalkylene diols, such as diethylene glycol, polyethylene glycol, polypropylene glycol, and polytetramethylene ether glycol; and cycloalkylene diols, such as 1,2-cyclohexanediol, 1,4-cyclohexanediol, 1,2-cyclohexanedimethanol, and 1,4-cyclohexanedimethanol. Thereamong, from the standpoint of biodegradability, ethylene glycol, 1,3-propanediol, and 1,4-butanediol are preferred, ethylene glycol and 1,4-butanediol are more preferred, and 1,4-butanediol is particularly preferred. These aliphatic diols may or may not be in the form of their derivatives.

Specific examples of the aromatic diol include xylylene glycol, 4,4'-dihydroxybiphenyl, 2,2-bis(4'-hydroxyphenyl)propane, 2,2-bis (4'-$\beta$-hydroxyethoxyphenyl)propane, bis(4-hydroxyphenyl)sulfone, and bis(4-$\beta$-hydroxyethoxyphenyl) sulfonic acid. These aromatic diols may or may not be in the form of their derivatives.

The above-described aliphatic diol compounds and/or aromatic diol compounds may be compounds having a structure in which one or more kinds of diols are dehydrated and condensed with each other.

Such diols may be used singly, or in combination of two or more kinds thereof.

Further, ethylene glycol, 1,3-propanediol, 1,4-butanediol, or the like that is derived from a plant material can be used.

• Total Content Ratio of Diol Units in Aliphatic-Aromatic Polyester

A total content ratio of diol units in the aliphatic-aromatic polyester is not particularly limited; however, from the standpoint of fluidity and melt tension, it is usually 10% by mole or more, preferably 30% by mole or more, more preferably 40% by mole or more, and still more preferably 45% by mole or more, but usually 60% by mole or less, and preferably 55% by mole or less, with respect to 100% by mole of all structural units constituting the aliphatic-aromatic polyester. The calculation of the total content ratio of diol units in the aliphatic-aromatic polyester is based on the smallest ester unit of the aliphatic-aromatic polyester. Accordingly, the total content ratio of diol units is a ratio of the number of moles of the smallest diol unit with respect to a total number of moles when the smallest ester unit of the aliphatic-aromatic polyester is counted as 1 mole. Further, when the aliphatic-aromatic polyester contains a single type of diol unit, the "total content ratio" refers to a ratio of the number of moles of the single kind of diol unit with respect to the number of moles of all ester units and, when the aliphatic-aromatic polyester contains two or more kinds of diol units, the "total content ratio" refers to a ratio of a total number of moles of the two or more kinds of diol units with respect to the number of moles of all ester units.

(Dicarboxylic Acid)

As a dicarboxylic acid giving a dicarboxylic acid unit, at least an aliphatic dicarboxylic acid and an aromatic dicarboxylic acid are used and, as these aliphatic dicarboxylic acid and aromatic dicarboxylic acid as well as an optional other dicarboxylic acid, those dicarboxylic acids that are usually used as raw materials of a polyester can be used with no particular limitation.

The dicarboxylic acids may each have a straight-chain structure, a branched-chain structure, or a ring structure.

The types of dicarboxylic acids giving dicarboxylic acid units are specifically enumerated below, and at least one kind of polyester may contain a structural unit derived from any of the below-enumerated dicarboxylic acids.

The number of carbon atoms of the aliphatic dicarboxylic acid is not particularly limited; however, it is usually 2 to 36, preferably 3 to 12, more preferably 3 to 10, still more preferably 3 to 6, and particularly preferably 4.

When the number of carbon atoms of the aliphatic dicarboxylic acid is equal to or more than the lower limit of the above-described range, good moldability can be obtained. Meanwhile, when the number of carbon atoms of the aliphatic dicarboxylic acid is equal to or less than the upper limit of the above-described range, the mechanical properties can be further improved.

Specific examples of the aliphatic dicarboxylic acid include aliphatic dicarboxylic acids, such as oxalic acid, malonic acid, succinic acid, succinic anhydride, glutaric acid, adipic acid, pimelic acid, suberic acid, azelaic acid, sebacic acid, dodecanedioic acid, brassylic acid, maleic acid, fumaric acid, and dimer acid. Thereamong, from the standpoint of thermal stability and crystallinity, a saturated aliphatic dicarboxylic acid such as succinic acid, succinic anhydride, adipic acid, or sebacic acid is preferred, and succinic acid is particularly preferred. Succinic acid (number of carbon atoms = 4) has a smaller number of carbon atoms than other dicarboxylic acids such as adipic acid (number of carbon atoms = 6) and sebacic acid (number of carbon atoms = 10); therefore, it can increase the ester group content, making it easier to adjust the ester group content to be in the range according to the present embodiment. As the aliphatic dicarboxylic acid unit, a succinic acid unit may be used singly, or two or more kinds of aliphatic dicarboxylic acid units may be used in combination; however, it is most preferred to use a succinic acid unit singly. These aliphatic diols may or may not be in the form of their derivatives.

The number of carbon atoms of the aromatic dicarboxylic acid is not particularly limited; however, it is usually 6 to 30, preferably 6 to 25, more preferably 6 to 15, and still more preferably 6 to 8.

When the number of carbon atoms of the aromatic dicarboxylic acid is equal to or more than the lower limit of the above-described range, the thermal stability can be further improved. Meanwhile, when the number of carbon atoms of the aromatic dicarboxylic acid is equal to or less than the upper limit of the above-described range, the moldability can be further improved.

Specific examples of the aromatic dicarboxylic acid include terephthalic acid, 2,5-furandicarboxylic acid, phthalic acid, isophthalic acid, dibromoisophthalic acid, sulfoisophthalic acid, 1,4-phenylenedioxydicarboxylic acid, 4,4'-diphenyldicarboxylic acid, 4,4'-diphenyl ether dicarboxylic acid, 4,4'-diphenyl ketone dicarboxylic acid, 4,4'-diphenoxyethanedicarboxylic acid, 4,4'-diphenylsulfonedicarboxylic acid, 2,6-naphthalenedicarboxylic acid, hexahydrophthalic acid, hexahydroisophthalic acid, and hexahydroterephthalic acid. Thereamong, from the standpoint of obtaining appropriate flexibility and crystallinity, terephthalic acid, 2,5-furandicarboxylic acid, or isophthalic acid is preferred, and terephthalic acid is particularly preferred. These aromatic dicarboxylic acids may or may not be in the form of their derivatives. For example, derivatives of the above-exemplified aromatic dicarboxylic acids are preferred, and examples thereof include lower alkyl esters having 1 to 4 carbon atoms, and acid anhydrides. Specific examples of derivatives of aromatic dicarboxylic acid compounds include: lower alkyl esters, such as methyl esters, ethyl esters, propyl esters, and butyl esters, of the above-exemplified aromatic dicarboxylic acids; and cyclic acid anhydrides of the above-exemplified aromatic dicarboxylic acids, such as succinic anhydride.

The above-described aliphatic dicarboxylic acids and aromatic dicarboxylic acids may each be used singly, or in combination of two or more kinds thereof.

Further, succinic acid, sebacic acid, or the like that is derived from a plant material can be used.

• Total Content Ratio of Dicarboxylic Acid Units in Aliphatic-Aromatic Polyester

A total content ratio of dicarboxylic acid units in the aliphatic-aromatic polyester is not particularly limited; however, from the standpoint of fluidity and melt tension, it is usually 10% by mole or more, preferably 30% by mole or more, more preferably 40% by mole or more, and still more preferably 45% by mole or more, but usually 90% by mole or less, preferably 70% by mole or less, more preferably 60% by mole or less, and still more preferably 55% by mole or less, with respect to 100% by mole of all structural units constituting the polyester. In other words, the content ratio of dicarboxylic acid units in the polyester is preferably 10% by mole or more and 90% by mole or less, particularly preferably 30% by mole or more and 70% by mole or less, more preferably 40% by mole or more and 60% by mole or less, and especially preferably 45% by mole or more and 55% by mole or less, with respect to 100% by mole of all structural units constituting the polyester.

Further, a total content ratio of aromatic dicarboxylic acid units in the polyester is not particularly limited; however, from the standpoint of biodegradability and moldability, a total ratio of aromatic dicarboxylic acid units in all dicarboxylic acid-derived structural units (100% by mole) contained in the polyester is usually 10% by mole or more, preferably 15% by mole or more, more preferably 20% by mole or more, and still more preferably 35% by mole or more, but usually 90% by mole or less, preferably 70% by mole or less, more preferably 60% by mole or less, and still more preferably 55% by mole or less. In other words, the ratio of aromatic dicarboxylic acid units in all dicarboxylic acid-derived structural units (100% by mole) contained in the polyester is preferably 10% by mole or more and 90% by mole or less, particularly preferably 15% by mole or more and 70% by mole or less, more preferably 20% by mole or more and 60% by mole or less, and especially preferably 35% by mole or more and 55% by mole or less. This range is particularly preferred as the ratio of terephthalic acid units in all dicarboxylic acid-derived structural units (100% by mole) contained in the polyester.

When the ratio is equal to or higher than the lower limit of the above-described range, the glass transition temperature of the polyester can be more reliably prevented from being excessively low, so that a coloring-inhibiting effect can be sufficiently obtained. Meanwhile, when the ratio is equal to or lower than the upper limit of the above-described range, the biodegradation rate of the polyester can be more reliably prevented from being excessively low.

The calculation of the total content ratio of dicarboxylic acid units and that of the total content ratio of aromatic dicarboxylic acid units in the aliphatic-aromatic polyester are also based on the smallest ester unit of the aliphatic-aromatic polyester in the same manner as the calculation of the total content ratio of diol units in the aliphatic-aromatic polyester. Further, when the aliphatic-aromatic polyester contains a single type of dicarboxylic acid unit, the "total content ratio of carboxylic acid units" refers to a ratio of the number of moles of the single kind of dicarboxylic acid unit with respect to the number of moles of all ester units and, when the aliphatic-aromatic polyester contains two or more kinds of dicarboxylic acid units, the "total content ratio of carboxylic acid units" refers to a ratio of a total number of moles of the two or more kinds of dicarboxylic acid units with respect to the number of moles of all ester units. The same applies to the total content ratio of aromatic dicarboxylic acid units.

A total content ratio of aliphatic-aromatic polyesters in the composition is 20% by mass or more, preferably 24% by mass or more, more preferably 30% by mass or more, and still more preferably 50% by mass or more. This total content ratio is 99% by mass or less, and may be 97% by mass or less, 95% by mass or less, or 90% by mass or less. In other words, the content ratio is 20% by mass or more and 99% by mass or less, preferably 24% by mass or more and 97% by mass or less, more preferably 30% by mass or more and 95% by mass or less, and particularly preferably 50% by mass or more and 90% by mass or less. When the composition contains a single type of aliphatic-aromatic polyester, the "total content ratio of aliphatic-aromatic polyesters" refers to a ratio (mass ratio) of the single kind of aliphatic-aromatic polyester with respect to the composition and, when the composition contains two or more kinds of aliphatic-aromatic polyesters, the "total content ratio of aliphatic-aromatic polyesters" refers to a ratio (mass ratio) of a total amount of the two or more kinds of aliphatic-aromatic polyesters with respect to the composition.

When the content ratio is equal to or higher than the lower limit of the above-described range, a composition that has excellent coloring resistance along with excellent flexibility and good moldability can be obtained.

From the standpoint of inhibiting the penetration of dye molecules by forming hydrogen bonds between adjacent polymer chains, the content of ester groups in the aliphatic-aromatic polyester is 9.6 mol/kg or more, preferably 9.7 mol/kg or more, particularly preferably 9.8 mol/kg or more, and more preferably 9.9 mol/kg or more. An upper limit of the content is not particularly limited; however, from the standpoint of not only further improving the moldability of the biodegradable resin composition according to the present embodiment that contains the aliphatic-aromatic polyester but also more reliably inhibiting the thermal deterioration of the composition during molding, the upper limit of the content is preferably 13.6 mol/kg or less, more preferably 12.6 mol/kg or less, and still more preferably 11.6 mol/kg or less. In other words, the content of ester groups in the aliphatic-aromatic polyester is preferably 9.6 mol/kg or more and 13.6 mol/kg or less, particularly preferably 9.7 mol/kg or more and 12.6 mol/kg or less, more preferably 9.8 mol/kg or more and 11.6 mol/kg or less, and especially preferably 9.9 mol/kg or more and 11.6 mol/kg or less. This content can be adjusted by the types and the polymerization ratios of the diol and the dicarboxylic acid that are structural units of the aliphatic-aromatic polyester.

The content of ester groups can be determined by dissolving the polyester in deuterated chloroform, measuring the $^1$H-NMR of the resultant (e.g., using an NMR apparatus "AVANCE 400" manufactured by Bruker AXS GmbH), and then evaluating the polymerization ratio of each of the structural units constituting the aliphatic-aromatic polyester, such as the smallest dicarboxylic acid unit and the smallest diol unit, from the thus measured chemical shift and integral ratio.

(Other Copolymerization Components)

In the production of the aliphatic-aromatic polyester, a constituent other than the above-described diol and dicarboxylic acid (other copolymerization component) may be copolymerized as well. Examples of a copolymerization component that can be used in this case include: oxycarboxylic acids, such as lactic acid, glycolic acid, hydroxybutyric acid, hydroxycaproic acid, 2-hydroxy-3,3-dimethylbutyric acid, 2-hydroxy-3-methylbutyric acid, 2-hydroxyisocaproic acid, malic acid, and citric acid; esters, lactones, and oxycarboxylic acid polymers of these oxycarboxylic acids; tri- or higher functional polyhydric alcohols, such as glycerin, trimethylolpropane, and pentaerythritol; tri- or higher functional polybasic carboxylic acids, such as propanetricarboxylic acid, pyromellitic acid, trimellitic acid, and benzophenonetetracarboxylic acid; and anhydrides of these tri- or higher functional polybasic carboxylic acids.

A polyester having a high viscosity can be easily obtained by adding a small amount of a tri- or higher functional oxycarboxylic acid, a tri- or higher functional alcohol, a tri-or higher functional carboxylic acid, or the like. Specifically, as the tri- or higher functional oxycarboxylic acid, malic acid or citric acid is preferred, and malic acid is particularly preferred. As a component constituting a tri- or higher functional polyhydric alcohol unit, glycerin, trimethylolpropane, pentaerythritol, or the like is preferred. These may be used singly, or in combination of two or more kinds thereof.

The amount of a tri- or higher functional polyfunctional compound is preferably 0.001 to 5% by mole, and more preferably 0.05 to 0.5% by mole, with respect to 100% by mole of all dicarboxylic acid components in polyester raw materials. When the amount is equal to or less than the upper limit of this range, the generation of a gel (unmelted matter) in the resulting polyester can be more reliably inhibited, while when the amount is equal to or more than the lower limit, the advantage of using the polyfunctional compound (usually, an increase in the viscosity of the resulting polyester) can be more reliably obtained.

The aliphatic-aromatic polyester may contain the above-described structural units, and specific examples of the polyester include polybutylene succinate terephthalate (PBST), polybutylene adipate terephthalate (PBAT), polyethylene succinate terephthalate (PEST), polybutylene sebacate terephthalate (PBSeT) and the like. Thereamong, from the standpoint of obtaining a resin composition having excellent coloring resistance, polybutylene succinate terephthalate or polyethylene succinate terephthalate is preferred, and polybutylene succinate terephthalate consisting of units of 1,4-butanediol, succinic acid, and terephthalic acid is particularly preferred.

[Properties of Aliphatic-Aromatic Polyester]

(Bio-Based Carbon Content)

The bio-based carbon content of the aliphatic-aromatic polyester, which is measured in accordance with ISO 16620-2, is not particularly limited; however, from the standpoint of reducing the carbon dioxide emissions as well as from the standpoint of obtaining superior coloring resistance, it is preferably 20% or more, more preferably 35% or more, and still more preferably 50% or more. An upper limit thereof does not need to be set particularly, and may be 100%, 80% or less, 70% or less, or 60% or less. In other words, the bio-based carbon content is preferably 20% or more and 100% or less, particularly preferably 35% or more and 80% or less, more preferably 50% or more and 70% or less, and especially preferably 50% or more and 60% or less. By increasing the bio-based carbon content, not only the fossil fuel consumption but also the carbon dioxide emissions can be reduced, which is beneficial from the standpoint of global environmental conservation. In addition, even superior coloring resistance can be obtained. Although the mechanism thereof is not fully clear, it is presumably because the crystallization rate during molding is increased, and this leads to the formation of a large number of fine crystals, as a result of which the penetration of a dye is further inhibited.

In the composition according to the present embodiment, the bio-based carbon content of the aliphatic-aromatic polyester having an ester group content of 9.6 mol/kg or more, and preferably 9.7 mol/kg or more, may satisfy the above-described range; however, it is preferred that the bio-based carbon content of the components contained in the composition as a whole satisfy the above-described range. The bio-based carbon content of the composition will be described below.

The bio-based carbon content can be controlled by adjusting the ratio of monomer units produced from plant-derived raw materials with respect to all structural units constituting one or more kinds of polyesters. The bio-based carbon content may be satisfied by one kind of polyester contained in the composition, or may be satisfied by one or more kinds of polyesters as a whole, and is preferably satisfied by at least one kind of polyester.

The bio-based carbon content can be calculated from the ratio of carbon-14 ($^{14}$C) in the total carbon mass in accordance with ISO 16620-2. The bio-based carbon content can also be calculated from the bio-based carbon content and the polymerization ratio of each of an aliphatic diol component, an aliphatic dicarboxylic acid component, and an aromatic dicarboxylic acid component that are raw materials.

In the present specification, a "biodegradable resin (polyester)" does not have to be a single kind of resin (polyester) that is entirely biodegradable, and may be a single kind of resin (polyester) that is partially biodegradable. For example, the resin (polyester) is preferably one that satisfies the above-described range of bio-degree.

(Melting Point and Glass Transition Temperature)

The melting point (Tm) of the aliphatic-aromatic polyester is not particularly limited; however, it is usually 50°C or higher, preferably 70°C or higher, more preferably 80°C or higher, and still more preferably 85°C or higher, but usually 200°C or lower, preferably 180°C or lower, more preferably 170°C or lower, and still more preferably 160°C or lower. In other words, the melting point (Tm) is preferably 50°C or higher and 200°C or lower, particularly preferably 70°C or higher and 180°C or lower, more preferably 80°C or higher and 170°C or lower, and especially preferably 85°C or higher and 160°C or lower. When the melting point is equal to or higher than the lower limit of the above-described range, superior heat resistance is obtained. Meanwhile, when the melting point is equal to or lower than the upper limit of the above-described range, molding can be performed more easily.

The glass transition temperature (Tg) of the aliphatic-aromatic polyester is not particularly limited; however, it is preferably -27°C or higher, more preferably -25°C or higher, and still more preferably -22°C or higher, but preferably 0°C or lower, more preferably -5°C or lower, and still more preferably -10°C or lower. In other words, the glass transition temperature (Tg) is preferably -27°C or higher and 0°C or lower, particularly preferably -25°C or higher and -5°C or lower, and more preferably -22°C or higher and -10°C or lower. When the glass transition temperature is equal to or higher than the lower limit of the above-described range, since the free volume of amorphous moiety at an actual use temperature is not excessively large, the coloring-inhibiting effect attributed to ester groups can be obtained more reliably. Meanwhile, when the glass transition temperature is equal to or lower than the upper limit of the above-described range, since the resin is flexible and tenacious, problems such as cracking, peeling from a substrate, and deterioration of the texture can be prevented more reliably.

The melting point and the glass transition temperature can be measured using a differential scanning calorimeter. Specifically, about 5 mg of a sample is precisely weighed, heat-melted in a nitrogen stream at a flow rate of 40 mL/min, and then cooled to -50°C or lower, and the glass transition temperature and the melting point can be measured in the subsequent process of heating the sample at a rate of 10°C/min.

The above-described melting point and glass transition temperature may be satisfied by one kind of polyester, or may be satisfied by all of one or more kinds of polyesters, and are preferably satisfied by at least one kind of polyester.

[Method of Producing Polyester]

A method of producing the polyester is not particularly limited, and any known method such as the method disclosed in Patent Document 1 may be employed. The method of producing the polyester will now be described; however, it is merely an example, and the method of producing the polyester is not limited thereto.

The polycondensation reaction in this case can be performed by setting appropriate conditions that have been conventionally used, and is not particularly limited. Usually, a method of allowing an esterification and/or transesterification reaction to proceed and subsequently performing a depressurization operation to further increase the degree of polymerization is employed.

At the time of producing an aliphatic-aromatic polyester resin, the amounts of a diol component, a dicarboxylic acid component, and optional other copolymerization components to be used are set such that the resulting aliphatic-aromatic polyester resin has a desired composition. Usually, the diol component and the dicarboxylic acid component react with each other in substantially equimolar amounts; however, since the diol component is distilled off during the esterification or transesterification reaction, the diol component is usually used in an amount larger by 1 to 20% by mole than the dicarboxylic acid component.

The reaction temperature is not particularly limited as long as it is a temperature at which the esterification reaction can be performed; however, from the standpoint of increasing the reaction rate, it is preferably 200°C or higher, more preferably 210°C or higher and, in order to inhibit coloring and the like of the resulting polyester, the reaction temperature is preferably 270°C or lower, more preferably 260°C or lower, and particularly preferably 250°C or lower. In other words, the reaction temperature is preferably 200°C or higher and 270°C or lower, particularly preferably 210°C or higher and 260°C or lower, and still more preferably 210°C or higher and 250°C or lower.

The reaction time is also not particularly limited; however, it is preferably 1 hour or longer, but preferably 10 hours or shorter, and more preferably 4 hours or shorter. In other words, the reaction time is preferably 1 hour or longer and 10 hours or shorter, and particularly preferably 1 hour or longer and 4 hours or shorter.

Subsequently, a reaction vessel is depressurized so as to increase the degree of polymerization.

The reaction pressure is not particularly limited; however, it is usually 0.01 kPa or higher, and preferably 0.03 kPa or higher, but usually 1.4 kPa or lower, and preferably 0.4 kPa or lower. In other words, the reaction pressure is preferably 0.01 kPa or higher and 1.4 kPa or lower, and particularly preferably 0.03 kPa or higher and 0.4 kPa or lower. When the pressure during the polycondensation reaction is in the above-described range, for example, a reduction in molecular weight and coloring of the resulting polyester due to thermal decomposition associated with an increase in the polycondensation time can be prevented, so that a polyester exhibiting sufficient properties for practical use can be produced more easily.

The reaction temperature is not particularly limited; however, it is usually 215°C or higher, and preferably 220°C or higher, but usually 270°C or lower, and preferably 260°C or lower. In other words, the reaction temperature is preferably 215°C or higher and 270°C or lower, and particularly preferably 220°C or higher and 260°C or lower. When the reaction temperature is equal to or higher than the lower limit of the above-described range, the polycondensation reaction rate is increased; therefore, not only an increase in the time required for the production of a polyester having a high degree of polymerization can be prevented but also a high-power stirrer is not necessary, which is economically advantageous. Meanwhile, when the reaction temperature is equal to or lower than the upper limit of the above-described range, thermal decomposition of the polyester resin during its production is unlikely to occur, so that a polyester having a high degree of polymerization can be produced more easily.

The reaction time is not particularly limited; however, it is usually 1 hour or longer, but usually 15 hours or shorter, preferably 10 hours or shorter, and more preferably 8 hours or shorter. In other words, the reaction time is preferably 1 hour or longer and 15 hours or shorter, particularly preferably 1 hour or longer and 10 hours or shorter, and more preferably 1 hour or longer and 8 hours or shorter. When the reaction time is 1 hour or longer, the reaction can proceed sufficiently, so that a polyester having a high degree of polymerization can be obtained more easily, and the mechanical properties of a molded product of the polyester are improved. Meanwhile, when the reaction time is 15 hours or shorter, a reduction in molecular weight of the resulting polyester due to thermal decomposition can be more reliably inhibited, and the mechanical properties of a molded product of the polyester can be further improved. In addition, an increase in the amount of carboxyl terminals due to thermal decomposition, which adversely affects the durability of the polyester resin, can be more reliably inhibited.

By controlling the temperature, the time, and the pressure of the polycondensation reaction to be in the above-described respective ranges, a polyester resin having a desired intrinsic viscosity can be obtained.

(Reaction Catalyst)

The aliphatic-aromatic polyester resin is usually produced in the presence of a catalyst. As the catalyst, any known catalyst that can be used for the production of a polyester resin can be selected as long as the effects of the present invention are not markedly impaired.

As the catalyst, generally, a compound containing at least one of the metal elements belonging to the periodic table Groups 1 to 14 is used. In order to reduce the polyester terminal concentration that affects the thermal stability of the polyester, any of the metal elements belonging to the periodic table Groups 3 to 6 that exhibit Lewis acidity is preferred. Specific examples of the metal elements include scandium, titanium, zirconium, vanadium, molybdenum, and tungsten, among which titanium and zirconium are particularly preferred because of their availability, and titanium is more preferred in terms of reaction activity.

In the present embodiment, as the catalyst, an organic group-containing compound such as a carboxylate, an alkoxy salt, an organic sulfonate, or a $\beta$-diketonate salt, which contains any of the above-described metal elements; an inorganic compound, such as an oxide or a halide of any of the above-described metal elements; or a mixture thereof is preferably used.

In the present embodiment, since the polymerization rate increases when the catalyst is in a molten or dissolved state during the polymerization, the catalyst is preferably a compound that is in the form of a liquid during the polymerization or dissolves in an ester oligomer or a polyester. Although the polycondensation is preferably performed in the absence of solvent, a small amount of a solvent may be used separately for dissolving the catalyst. Examples of this solvent used for dissolving the catalyst include: alcohols, such as methanol, ethanol, isopropanol, and butanol; the aforementioned diols, such as ethylene glycol, butanediol, and pentanediol; ethers, such as diethyl ether and tetrahydrofuran; nitriles such as acetonitrile; hydrocarbon compounds, such as heptane and toluene; water; and mixtures thereof. In order to dissolve the catalyst, the catalyst may be diluted with a diol such as 1,4-butanediol or ethylene glycol and, in this case, the diol can also function as a raw material of the polyester.

As a titanium compound, a tetraalkyl titanate or a hydrolysate thereof is preferred, and specific examples thereof include tetra-*n*-propyl titanate, tetraisopropyl titanate, tetra-*n*-butyl titanate, tetra-*t*-butyl titanate, tetraphenyl titanate, tetracyclohexyl titanate, tetrabenzyl titanate, mixed titanates and hydrolysates thereof, and the like.

Further, as a titanium compound, a liquid material obtained by mixing an alcohol, a compound of a Group 2 metal in the long-form periodic table (Nomenclature of Inorganic Chemistry IUPAC Recommendations 2005) (which may be hereinafter referred to as a "Group 2 metal compound in the long-form periodic table"), a phosphate compound, and a titanium compound can be used as well.

The amount of the catalyst to be added is not particularly limited; however, in terms of the amount of the metal with respect to the polyester to be produced, a lower limit value is usually 0.1 ppm by mass or more, preferably 0.5 ppm by mass or more, and more preferably 1 ppm by mass or more, while an upper limit value is usually 3,000 ppm by mass or less, preferably 1,000 ppm by mass or less, more preferably 250 ppm by mass or less, and particularly preferably 130 ppm by mass or less. In other words, the amount of the catalyst to be added is preferably 0.1 ppm by mass or more and 3,000 ppm by mass or less, particularly preferably 0.5 ppm by mass or more and 1,000 ppm by mass or less, more preferably 1 ppm by mass or more and to 250 ppm by mass or less, and especially preferably 1 ppm by mass or more and 130 ppm by mass or less. This range can be particularly preferably applied when a metal compound is used as a polycondensation catalyst. When the amount of the catalyst to be used is equal to or less than the upper limit of the above-described range, not only it is economically advantageous, but also deterioration of the thermal stability and the hydrolysis resistance of the resulting polyester due to an increase in the amount of carboxyl terminals and the residual catalyst concentration can be more reliably inhibited. Meanwhile, when the amount of the catalyst to be used is equal to or more than the lower limit of the above-described range, thermal decomposition during the polyester production, which is associated with a decrease in the polymerization activity, can be more reliably inhibited, so that a polyester exhibiting practically useful physical properties can be obtained more easily.

[Other Components]

The composition may contain components other than the above-described polyester, and examples of such components include polyesters other than the above-described aliphatic-aromatic polyester, resins other than polyesters, carbodiimide compounds, isocyanate compounds, fillers, and plasticizers. Particularly, when the composition contains a resin other than the polyester, it is preferred to use a biodegradable resin as the resin and, for example, a polycaprolactone, a polyamide, a polyvinyl alcohol, a cellulose ester, an animal/plant fine powder material such as starch, cellulose, paper, wood flour, chitin/chitosan, coconut shell powder, or walnut shell powder, or a mixture of these materials may be incorporated. Further, for the purpose of adjusting the physical properties and processability of a molded body, additives such as a thermal stabilizer, a plasticizer, a lubricant, an anti-blocking agent, a nucleating agent, an inorganic filler, a colorant, a pigment, and a UV absorber, as well as a modifier, a cross-linking agent, and the like may be incorporated.

<Nucleating Agent>

Examples of the nucleating agent that can be used include: silicate compounds, such as talc, mica, clay, and zeolite; metal phenylphosphonates, such as zinc phenylphosphonate, calcium phenylphosphonate, and magnesium phenylphosphonate; metal soaps that are salts of a fatty acid, such as lauric acid, myristic acid, palmitic acid, stearic acid, behenic acid, oleic acid, or erucic acid, and a metal ion, such as zinc, calcium, magnesium, or aluminum; fatty acid amides, such as stearamide, 12-hydroxystearamide, erucamide, and ethylenebis-stearamide; cellulose powders; and polyethylene waxes. Thereamong, talc or a polyethylene wax is preferred from the standpoint of moldability-improving effect and cost, and talc is most preferred since it has a small adverse effect when released into the environment.

From the standpoint of transparency and smoothness, the particle size of the talc is, in terms of median diameter, preferably 2.50 $\mu$m or less, more preferably 1.50 $\mu$m or less, still more preferably 1.00 $\mu$m or less, and most preferably 0.7 $\mu$m or less. Meanwhile, from the standpoint of preventing dust from scattering and adhering to an equipment to facilitate the production, the median diameter is preferably 0.05 $\mu$m or more, more preferably 0.10 $\mu$m or more, still more preferably 0.2 $\mu$m or more, and most preferably 0.3 $\mu$m or more. In other words, the particle size of the talc is, in terms of median diameter, preferably 0.05 $\mu$m or more and 2.50 $\mu$m or less, particularly preferably 0.10 $\mu$m or more and 1.50 $\mu$m or less, still more preferably 0.20 $\mu$m or more and 1.00 $\mu$m or less, and especially preferably 0.30 $\mu$m or more and 0.70 $\mu$m or less.

The nucleating agent may be added during the above-described esterification reaction, or may be added at any stage after the esterification reaction. The nucleating agent is more preferably added during the esterification reaction since this makes pelletization after the completion of the reaction easier. When talc is added as the nucleating agent during the esterification reaction, the amount thereof is preferably 0.001 parts by mass or more, more preferably 0.01 parts by mass or more, still more preferably 0.05 parts by mass or more, and most preferably 0.15 parts by mass or more, but preferably 0.5 parts by mass or less, more preferably 0.4 parts by mass or less, still more preferably 0.3 parts by mass or less, and most preferably 0.25 parts by mass or less, with respect to 100 parts by mass of the aliphatic-aromatic polyester resin to be obtained. In other words, when talc is added as the nucleating agent during the esterification reaction, the amount thereof is preferably 0.001 parts by mass or more and 0.5 parts by mass or less, more preferably 0.01 parts by mass or more and 0.4 parts by mass or ess, still more preferably 0.05 parts by mass or more and 0.3 parts by mass or less, and most preferably 0.15 parts by mass or more and 0.25 parts by mass or less, with respect to 100 parts by mass of the aliphatic-aromatic polyester resin to be obtained. When the amount of added talc is in the above-described range, not only a more sufficient moldability-improving effect can be obtained and the transparency and the smoothness of a molded product are less likely to be deteriorated, but also a decrease in the reaction rate and an increase in the loss due to an increase in the viscosity of the composition can be more reliably inhibited.

From the standpoint of obtaining appropriate hardness and mouth-opening property in molding, the composition may further contain a polyester other than the aliphatic-aromatic polyester. As this polyester other than the aliphatic-aromatic polyester, from the standpoint of obtaining good biodegradability, the composition preferably contains an aliphatic polyester.

It is noted here that, in the present specification, the "aliphatic polyester" is not an aliphatic-aromatic polyester, but is a polyester containing aliphatic diol and aliphatic dicarboxylic acid units as main structural units, or a polyester containing aliphatic oxycarboxylic acid units as main structural units.

Examples of the aliphatic polyester include polybutylene succinate (PBS), polybutylene succinate adipate (PBSA), polybutylene succinate sebacate (PBSSe), polycaprolactone (PCL), poly(3-hydroxybutyrate) (PHB), poly(3-hydroxybutyrate/3-hydroxyvalerate) (PHBV), poly(3-hydroxybutyrate/3-hydroxyhexanoate) (PHBH), and polylactic acid (PLA). From the standpoint of heat resistance, moldability, biodegradability, and the like, polybutylene succinate, polybutylene succinate adipate, polybutylene succinate sebacate, poly(3-hydroxybutyrate/3-hydroxyhexanoate), or polylactic acid is preferred, and polybutylene succinate or polybutylene succinate sebacate is particularly preferred.

The content ratio of the polyester other than the aliphatic-aromatic polyester in the composition is not particularly limited; however, it is preferably 5% by mass or more, more preferably 10% by mass or more, and still more preferably 15% by mass or more, but preferably 80% by mass or less, more preferably 70% by mass or less, and still more preferably 60% by mass or less. In other words, this content ratio is preferably 5% by mass or more and 80% by mass or less, particularly preferably 10% by mass or more and 70% by mass or less, and more preferably 15% by mass or more and 60% by mass or less. When the content ratio is equal to or higher than the lower limit of the above-described range, a molded product and the like can be more easily adjusted to have an appropriate hardness and an appropriate surface slipperiness. Meanwhile, when the content ratio is equal to or lower than the upper limit of the above-described range, a composition excellent in flexibility, breaking strength, and moldability can be obtained more easily.

The biodegradable resin composition according to one embodiment of the present invention further contains a filler from the standpoint of mold releasability, mouth-opening property, shortening of the molding time, and the like, particularly from the standpoint of obtaining a molded body having good mouth-opening property. Examples of filler include talc, clay, mica, calcium carbonate, barium sulfate, titanium oxide, basic magnesium sulfate, zeolite, and aluminosilicate and, from the standpoint of obtaining a molding time-shortening effect with a small amount, the filler is preferably talc, calcium carbonate, or aluminosilicate, particularly preferably talc.

The content ratio of the filler in the composition is 0.3% by mass or more, and preferably 1.0% by mass or more, but 50.0% by mass or less, preferably 30.0% by mass or less, and more preferably 15.0% by mass or less. In other words, this content ratio is 0.3% by mass or more and 50.0% by mass or less, preferably 1.0% by mass or more and 30.0% by mass or less, and more preferably 1.0% by mass or more and 15.0% by mass or less. When the content ratio is equal to or higher than the lower limit of the above-described range, excellent mouth-opening property, good mold releasability, a molding time-shortening effect, and the like can be obtained more easily in a molded body and the like. Meanwhile, when the content ratio is equal to or lower than the upper limit of the above-described range, excellent breaking strength and excellent moldability can be obtained more easily.

<Properties of Biodegradable Resin Composition>

(Bio-Based Carbon Content)

A total bio-based carbon content of the biodegradable resin composition, which is measured in accordance with ISO 16620-2, is not particularly limited; however, it is preferably 20% or more, more preferably 35% or more, and still more preferably 50% or more. An upper limit thereof does not need to be set particularly, and may be 100%, 90% or less, 80% or less, or 70% or less. In other words, the bio-based carbon content is preferably 20% or more and 100% or less, particularly preferably 35% or more and 90% or less, more preferably 50% or more and 80% or less, and especially preferably 50% or more and 70% or less. By increasing the bio-based carbon content, not only the fossil fuel consumption but also the carbon dioxide emissions can be reduced, which is beneficial from the standpoint of global environmental conservation.

The bio-based carbon content does not have to be satisfied by the above-described aliphatic-aromatic polyester, and may be satisfied by the composition as a whole. For example, the composition may contain an aliphatic-aromatic polyester having a bio-based carbon content of 0% and an aliphatic polyester having a bio-based carbon content of 49%, and the bio-based carbon content of the composition may be adjusted by setting the content of each component as appropriate.

The bio-based carbon content can be controlled by adjusting the ratio of monomer units produced from plant-derived raw materials with respect to all structural units constituting one or more kinds of polyesters contained in the composition.

The bio-based carbon content can be calculated from the ratio of carbon-14 ($^{14}$C) in the total carbon mass of the composition in accordance with ISO 16620-2. Further, for example, when determining the bio-based carbon content of a polyester contained in the composition, it can be calculated from the bio-based carbon content and the polymerization ratio of each of an aliphatic diol component, an aliphatic dicarboxylic acid component, and an aromatic dicarboxylic acid component that are raw materials.

The term "biodegradable resin composition" used herein usually refers to a resin composition in which the above-described bio-based carbon content is at least 20% or higher.

<Method of Producing Biodegradable Resin Composition>

A method of producing the biodegradable resin composition is not particularly limited, and any known method can be applied.

For example, a production method that includes the mixing step of mixing the above-mentioned polyester with other optional components may be employed. It is noted here that this production method may also include steps other than the mixing step. Further, the production of the biodegradable resin composition is not limited to this method.

A method of mixing the polyester with other optional components in the mixing step is not particularly limited and any known method may be employed, and any component may be mixed in combination as appropriate. Examples of the method include: a method of melt-mixing the polyester and other optional components all at once using an extruder; and a method of charging each of these materials into a kneader from separate feeders and melt-mixing them. Further, the concentration of each component can be adjusted by producing in advance a masterbatch containing the polyester and other optional components, diluting the masterbatch again with the polyester, and then kneading the resultant.

As the extruder, a single-screw or twin-screw extruder can be utilized. A resin kneaded by a twin-screw extruder can be pelletized using a pelletizer or an underwater cutter and, in the case of subsequently producing a molded body, the resulting pellets can be used in various subsequent molding processes. It is also possible to directly feed the polyester, other optional components, and other raw material pellets to a molding machine and to thereby prepare a composition and obtain a molded body such as a film simultaneously.

<Polybutylene Succinate Terephthalate (PBST)>

The polybutylene succinate terephthalate according to another embodiment of the present invention (hereinafter, also simply referred to as "polybutylene succinate terephthalate") is a polybutylene succinate terephthalate that has an ester group content of 9.6 mol/kg or more, preferably 9.7 mol/kg or more, and a bio-based carbon content of 20% or more as measured in accordance with ISO 16620-2. In this polybutylene succinate terephthalate, since the ester group content is in a specific range or more, an effect that coloring with a dye contained in a food or beverage is unlikely to occur can be obtained in the same manner as in the above-described composition.

The polybutylene succinate terephthalate is a polyester that contains 1,4-butanediol as a diol unit, succinic acid as an aliphatic dicarboxylic acid unit, and terephthalic acid as an aromatic dicarboxylic acid unit. It is noted here that these diols and dicarboxylic acids may or may not be in the form of their derivatives.

The content ratio of 1,4-butanediol in the polybutylene succinate terephthalate is not particularly limited, and the total content ratio of diol units in the aliphatic-aromatic polyester that is described above in the section of "Composition" can be applied in the same manner.

The content ratio of the terephthalic acid unit in the polybutylene succinate terephthalate is also not particularly limited, and the ratio of an aromatic dicarboxylic acid unit in dicarboxylic acid units that is described above in the section of "Composition" can be applied in the same manner.

The content of ester groups in the polybutylene succinate terephthalate is not particularly limited as long as it is 9.6 mol/kg or more and, as a preferred condition, the content of ester groups in the aliphatic-aromatic polyester that is described above in the section of "Composition" can be applied in the same manner.

The bio-based carbon content of the polybutylene succinate terephthalate that is measured in accordance with ISO 16620-2 is not particularly limited as long as it is 20% or more and, as a preferred condition, the bio-based carbon content of the aliphatic-aromatic polyester that is described above in the section of "Composition" can be applied in the same manner.

<Molded Body>

The molded body according to yet another embodiment of the present invention is a molded body formed of the above-described biodegradable resin composition, or a molded body formed of the above-described polybutylene succinate terephthalate. These molded bodies are hereinafter collectively referred to as "molded body". A method of producing the molded body is not particularly limited, and the molded body can be obtained by any known polyester molding method.

The molding method is not particularly limited, and any known method such as compression molding, lamination molding, injection molding, extrusion molding, vacuum molding, pressure molding, blow molding, inflation molding, or stretch molding may be employed. More specifically, for example, a method in which a film-like material, sheet-like material, or cylindrical material extruded in a prescribed thickness from a T-die, an I-die, a round die, or the like is cooled with a cooling roll, water, compressed air, or the like and thereby solidified may be employed.

<Multilayer Body>

The multilayer body according to yet another embodiment of the present invention is a multilayer body that includes a layer formed of the above-described biodegradable resin composition, or a multilayer body that includes a layer formed of the above-described polybutylene succinate terephthalate. These multilayer bodies are hereinafter collectively referred to as "multilayer body". A method of producing the multilayer body is not particularly limited, and the molded body can be obtained by any known multilayer body molding method.

The molding method is not particularly limited and, for example, any of the following methods can be employed: a method of simultaneously disposing the above-described biodegradable resin composition and other materials in layers by multilayer extrusion molding, such as multilayer T-die molding, multilayer blow molding, multilayer inflation molding, or multilayer pipe molding; a method of heat-melting the above-described biodegradable resin composition, and extruding or injection-molding this composition on other substrate (e.g., a paper, a sheet, or a film); a method of adhering the above-described biodegradable resin composition, which has been molded into a film or a sheet in advance, to other substrate; a method of vapor-depositing or applying other materials to the above-described biodegradable resin composition that has been molded into a film or a sheet in advance; and a method of dissolving the above-described biodegradable resin composition in a solvent and applying the resultant onto other substrate. Two or more of these methods may be combined and, for example, a method of further adhering another substrate to a sheet-like multilayer body obtained by multilayer extrusion molding may be employed. Moreover, the sheet-like multilayer body can be molded into a desired shape by performing a secondary processing such as vacuum molding, pressure molding, press molding, punching, press-bonding, or fusion-bonding.

The substrate is not particularly limited as long as it can be used for a food and beverage packaging material, and examples thereof include paper, resin sheets, sheets made of inorganic materials, cloth, nonwoven fabrics, and wood. Thereamong, paper, biodegradable resin sheets, biodegradable nonwoven fabrics, biodegradable cloth made of cotton, silk, or rayon, and wood are particularly preferred because of their biodegradability.

The number of layers constituting the multilayer body is not particularly limited as long as it is two or more, and at least one of the layers is formed of the above-described biodegradable resin composition. The multilayer body can be designed as appropriate in accordance with the intended use and, specifically, the multilayer body may have two or more layers, three or more layers, four or more layers, but ten or fewer layers, five or fewer layers, three or fewer layers, or two layers. In other words, the number of layers of the multilayer body is preferably 2 or more and 10 or fewer, particularly preferably 2 or more and 7 or fewer, more preferably 2 or more and 5 or fewer, and still more preferably 2 or more and 3 or fewer.

<Use>

The use of the molded body, the multilayer body, and the polybutylene succinate terephthalate that are formed of the above-described biodegradable resin composition is not limited; however, they are preferably used as food or beverage packaging materials from the standpoint of being unlikely to be colored with a dye contained in a food or beverage. Specific examples of the food or beverage packaging materials include food or beverage containers, food or beverage wraps, food or beverage shrink films, bags, and wrapping papers, among which food or beverage containers are preferred.

Specific modes of the food or beverage containers are not particularly limited, and examples thereof include cups (particularly paper cups), beverage packs, plates, and trays.

EXAMPLES

Specific aspects of the present invention will now be described in more detail by way of Examples; however, the present invention is not limited by the below-described Examples within the gist of the present invention. The values of various production conditions and evaluation results in the below-described Examples each have a meaning as a preferred upper or lower limit value in an embodiment of the present invention, and a preferred range may be defined by a combination of the above-described upper or lower limit value and a value described below in an Example, or a combination of values described in Examples.

<Analysis, Measurement, and Evaluation Methods>

The analysis methods, the measurements of various physical properties, and the evaluation methods in Examples are as follows.

[Content of Ester Groups and Ratio of Terephthalic Acid Unit in Polyester]

After dissolving a polyester in deuterated chloroform, $^1$H-NMR was measured using an NMR apparatus "AVANCE 400" manufactured by Bruker AXS GmbH, and the polymerization ratio of each of the structural units constituting the polyester, such as a dicarboxylic acid unit and a diol unit, was evaluated from the thus measured chemical shift and integral ratio. Based on this evaluation, the content of ester groups and the ratio of terephthalic acid-derived structural units in all dicarboxylic acid units were determined.

[Glass Transition Temperature and Melting Point of Polyester]

The glass transition temperature (Tg) of the polyester was measured using a differential scanning calorimeter (product name: DSC220, manufactured by Seiko, Inc.). Specifically, about 5 mg of a sample was weighed, heat-melted in a nitrogen stream at a flow rate of 40 mL/min, and then cooled at a rate of 10°C/min, and the glass transition temperature and the melting point were measured in the subsequent process of heating the sample at a rate of 10°C/min.

[Crystallization Peak Temperature and Half-Value Width of Polyester]

In the above-described measurement of the glass transition temperature and the melting point in which the sample was heat-melted and then cooled at a rate of 10°C/min, a DSC curve was obtained by plotting the temperature on the abscissa and the heat flux heat generation on the ordinate as positive, and the temperature at which the heat generation was maximum when a straight line connecting the start point and the end point of an exothermic peak was subtracted from the curve as a baseline was defined as the crystallization peak temperature. Further, the full width at half maximum of the exothermic peak, i.e. the temperature difference between two points at which the height from the baseline was 1/2 of the maximum value, was defined as the crystallization peak half-value width. The smaller the crystallization peak half-value width, the higher the crystallization rate.

[Bio-Based Carbon Content]

The bio-based carbon content of each polyester resin was evaluated in accordance with ISO 16620-2.

Specifically, a composition was burned to collect carbon dioxide, and this carbon dioxide was reduced with hydrogen and a catalyst to recover the carbon atoms in the composition as graphite. Then, the carbon isotope ratio was measured using an accelerator mass spectrometer. Since $^{14}C$ exists in the atmosphere at a certain ratio, $^{14}C$ is contained in biomass-derived carbon (bio-based carbon) at the same ratio. On the other hand, since $^{14}C$ decays with a half-life of 5,730 years, carbon derived from fossil resources does not contain $^{14}C$. Therefore, the bio-based carbon content was determined by calculating the ratio of $^{14}C$ in the sample with respect to the standard ratio of $^{14}C$ contained in the modern atmosphere.

[Coloring Resistance]

(1) Preparation of Beverage Standard Solution

(Coffee)

A liquid obtained by dissolving "Regular Soluble Coffee NESCAFE GOLD BLEND (Stick Black)" manufactured by Nestle Japan Ltd. in hot water at a prescribed concentration (2 g in 140 g of hot water) was cooled overnight in a 4°C refrigerator.

(Tea)

A tea bag of "LIPTON YELLOW LABEL" manufactured by Unilever Japan K.K. was extracted for 2 minutes in 160 mL of hot water and then removed, and the resulting liquid was cooled overnight.

(2) Immersion Test

A rectangular test piece of about 30 mm in width and about 60 mm in length was prepared from a molded body of a resin composition, hung in such a manner that the lower half of the test piece was immersed in the beverage standard solution, and then left to stand in a 4°C refrigerator for a prescribed time. Thereafter, the test piece was taken out, washed with tap water, wiped off of water, and then air-dried.

(3) Color Difference Measurement

The color of the test piece was measured by a transmission method using a colorimeter "ZE7700" manufactured by Nippon Denshoku Industries, Co., Ltd. The color difference between the part immersed in the beverage standard solution and the part not immersed in the beverage standard solution was determined as $\Delta E^*_{ab}$ (CIELAB 1976 L*a*b* color difference) according to JIS Z8781-4. The smaller this value, the lower the degree of coloring and the superior the coloring resistance.

[Biodegradability]

Film-like test pieces were cut in a rectangular shape of 50 mm $\times$ 30 mm and buried in a 1:1 (mass ratio) mixture of a horticultural soil ("Soil for Flowers and Vegetables", manufactured by IRIS OYAMA, Inc.) and a compost (seed source for biodegradation testing, manufactured by Yahata-Bussan Corporation), which mixture had a water content of 20% RH and was placed in a plastic airtight container, and this container was closed and left to stand in a 40°C incubator. The test pieces were each periodically taken out and observed, and it was confirmed that all of the test pieces had disappeared after 31 weeks from the start of the test.

[Mouth-Opening Property]

The mouth-opening property (the ease of spreading a folded and adhered cylindrical film to its original cylindrical shape) of a resin composition film molded using an inflation molding machine was evaluated on a 5-point scale in accordance with the following criteria. The higher the score, the easier it is to process the resin composition into a film, a bag, and the like.

5: The film can be easily spread to a cylindrical shape, using fingers with hardly any resistance.
4: There is slight resistance when peeling off the adhered film, but there is no problem in spreading the film only with fingers.
3: It is difficult to peel off the film only with fingers, but the film can be spread using an adhesive tape.
2: The film can be peeled off using an adhesive tape, but a favorable film cannot be obtained due to elongation and breakage caused by high resistance.
1: The adhered film cannot be peeled off even with an adhesive tape.

The method using an adhesive tape that was employed in this evaluation is a method in which two pieces of a weakly adhesive tape are applied to the respective sides of a folded film, pasted together with one end open, and then peeled apart from the open side to peel off the adhered film along with the adhesive tape.

<Materials>

[Resins]

(Aliphatic-Aromatic Polyesters)

(A1) Polybutylene succinate terephthalate (PBST) synthesized by the below-described Production Example 1 (bio-based carbon content: 22%, ester group content: 10.3 mol/kg)
(A2) Polybutylene succinate terephthalate (PBST) synthesized by the below-described Production Example 2 (bio-based carbon content: 63%, ester group content: 10.2 mol/kg)
(A3) Polybutylene adipate terephthalate (PBAT): "ECOFLEX C1200" manufactured by BASF Ltd. (bio-based carbon content: 0%, ester group content: 9.5 mol/kg)
(A4) Polybutylene succinate terephthalate (PBST) synthesized by the below-described Production Example 3 (bio-based carbon content: 20%, ester group content: 10.2 mol/kg)
(A5) Polybutylene succinate terephthalate (PBST) synthesized by the below-described Production Example 4 (bio-based carbon content: 18%, ester group content: 10.1 mol/kg)
(A6) Polybutylene succinate terephthalate (PBST) synthesized by the below-described Production Example 5 (bio-based carbon content: 15%, ester group content: 10.0 mol/kg)

(Aliphatic Polyester)

(B1) Polybutylene succinate (PBS): "BioPBS FZ91PB" manufactured by PTT MCC Biochem Co., Ltd. (bio-based carbon content: 49%, ester group content: 11.6 mol/kg)

[Additives]

(Inorganic Filler)

Talc: "MICRO ACE K-1" manufactured by Nippon Talc Co., Ltd. (this talc contains no carbon atom and thus does not affect the evaluation of the bio-based carbon content of a resin composition)

(Lubricant)

Erucic acid amide: "DIAMIDE L-200" manufactured by Mitsubishi Chemical Corporation (bio-based carbon content: 0%)

<Production of Polyesters>

[Production Example 1]

As raw materials, 110 parts by mass of succinic acid (derived from biomass), 127 parts by mass of terephthalic acid (derived from petroleum), 168 parts by mass of 1,4-butanediol (derived from petroleum), and 0.46 parts by mass of trimethylolpropane were charged to a reaction vessel equipped with a stirrer, a nitrogen introduction port, a heater, a thermometer, and a pressure reduction port, along with 4 parts by weight of a 1,4-butanediol solution in which 5% by weight of tetra-n-butyl titanate had been dissolved in advance, and 6.6 parts by weight of a 1,4-butanediol solution in which 2% by weight of magnesium acetate tetrahydrate had been dissolved in advance. The molar ratio of succinic acid and terephthalic acid was set at 55:45, the molar ratio of 1,4-butanediol with respect to a total molar amount of succinic acid and terephthalic acid was set at 1.1, and the amount of trimethylolpropane was set at 0.10% by mole with respect to all structural units of the polymer to be generated.

Nitrogen gas was introduced into the vessel while stirring the contents of the vessel, and the system was placed under a nitrogen atmosphere by vacuum replacement. Subsequently, the system was heated to 185°C with stirring, and the materials were allowed to react at this temperature for 45 minutes to 1 hour. Then, the temperature was raised to 220°C over a period of 1 hour and 30 minutes. Thereafter, the temperature was further raised to 230°C over a period of 1 hour and, at the same time, the pressure was reduced to 0.07 kPa or less over a period of 1 hour and 30 minutes. Polymerization was allowed to continue while maintaining this heated and reduced-pressure state, and polymerization was terminated once a prescribed viscosity was attained, whereby an aliphatic-aromatic polyester (A1) was obtained.

[Production Example 2]

An aliphatic-aromatic polyester (A2) was obtained in the same manner as in Production Example 1, except that the petroleum-derived 1,4-butanediol was changed to biomass-derived 1,4-butanediol.

[Production Example 3]

An aliphatic-aromatic polyester (A4) was obtained in the same manner as in Production Example 1, except that 100 parts by mass of succinic acid (derived from biomass) was changed to 140 parts by mass of terephthalic acid (derived from petroleum). It is noted here that, in this case, the molar ratio of succinic acid and terephthalic acid was 50:50.

[Production Example 4]

An aliphatic-aromatic polyester (A5) was obtained in the same manner as in Production Example 1, except that 90 parts by mass of succinic acid (derived from biomass) was changed to 155 parts by mass of terephthalic acid (derived from petroleum). It is noted here that, in this case, the molar ratio of succinic acid and terephthalic acid was 45:55.

[Production Example 5]

An aliphatic-aromatic polyester (A6) was obtained in the same manner as in Production Example 1, except that 80 parts by mass of succinic acid (derived from biomass) was changed to 169 parts by mass of terephthalic acid (derived from petroleum). It is noted here that, in this case, the molar ratio of succinic acid and terephthalic acid was 40:60.

<Production of Compositions>

[Examples 1 to 3 and Comparative Examples 1 to 4]

Compositions were obtained by mixing a resin(s) and additives in the respective ratios shown in Table 1, and then melt-kneading and pelletizing the resulting mixtures using a twin-screw extruder having a screw diameter of 30 mm at a set temperature of 150°C. The bio-based carbon content of each composition, which was calculated from the bio-based carbon content and mixing ratio of the respective raw materials, is shown in Table 1. Specifically, for example, in Example 2, the polyester (A1) had a carbon content of 61% and a bio-based carbon content of 22%, the polyester (B1) had a carbon content of 56% and a bio-based carbon content of 49%, and the lubricant had a carbon content of 78% and a bio-based carbon content of 0%; therefore, the bio-based carbon content in total carbon contained in the composition was calculated to be 28% as follows:

$(75 \times 0.61 \times 0.22 + 25 \times 0.56 \times 0.49 + 0.12 \times 0.78 \times 0)/(75 \times 0.61 + 25 \times 0.56 + 0.12 \times 0.78) = 0.28.$

The thus pelletized compositions were each supplied to an inflation molding machine equipped with a single-screw extruder having a screw diameter of 40 mm and a circular die having a diameter of 60 mm and a lip gap of 1.6 mm, and molded at a set temperature of 160°C and a blow ratio of 3.0, whereby 30 $\mu$m-thick films were obtained. For each of the thus obtained films, a coloring resistance test was conducted with an immersion time of 7 hours, and the results thereof are shown in Table 1.

[Examples 4 to 8 and Comparative Example 5]

The aliphatic-aromatic polyester resins (A1) to (A3) were each molded into a 120 $\mu$m-thick sheet using a press molding machine set at 180°C. For each of these films, a coloring resistance test was conducted with an immersion time of 2 hours, and the results thereof are shown in Table 2. Further, the ester group content of each resin, the ratio of terephthalic acid-derived structural units in all dicarboxylic acid-derived structural units, the glass transition temperature, and the bio-based carbon content of each composition are also shown in Table 2.
With regard to Examples 4 to 6, the crystallization peak temperature and the half-value width were analyzed, and the results thereof are shown in Table 2. Moreover, the DSC curves thereof are shown in FIG. 1.

[Table 1]

Table 1

| | | Example 1 | Example 2 | Example 3 | Comparative Example 1 | Comparative Example 2 | Comparative Example 3 | Comparative Example 4 |
|---|---|---|---|---|---|---|---|---|
| Resin composition (parts by mass) | A1 | 90 | 75 | 25 | - | - | - | 100 |
| | A3 | - | - | - | 90 | 75 | 25 | - |
| | B1 | - | 25 | 75 | - | 25 | 75 | - |
| | Talc | 10 | 3 | 3 | 10 | 3 | 3 | - |
| | Lubricant | 0.12 | 0.12 | 0.12 | 0.12 | 0.12 | 0.12 | 0.12 |
| Bio-based carbon content | | 22% | 28% | 42% | 0% | 11% | 36% | 22% |
| Coloring resistance ($\Delta E^*_{ab}$) | Coffee | 1.88 | 1.31 | 1.90 | 3.37 | 2.12 | 2.48 | - |
| | Tea | 0.94 | 0.90 | 0.62 | 1.58 | 1.50 | 1.03 | - |
| Biodegradability test (40°C·After 31 weeks) | | Disappeared | Disappeared | Disappeared | Disappeared | Disappeared | Disappeared | - |
| Mouth-opening property | | 3 | 5 | 5 | 4 | 5 | 5 | 2 |

Table 2

| | | Example 4 | Example 5 | Example 6 | Example 7 | Example 8 | Comparative Example 5 |
|---|---|---|---|---|---|---|---|
| Resin | | A2 | A1 | A4 | A5 | A6 | A3 |
| Terephthalic acid ratio (% by mole) | | 48 | 45 | 50 | 55 | 60 | - |
| Bio-based carbon content | | 63% | 22% | 20% | 18% | 15% | 0% |
| Glass transition temperature (°C) | | -16 | -20 | -12 | -8 | -3 | -29 |
| Ester group content (mol/kg) | | 10.2 | 10.3 | 10.2 | 10.1 | 10.0 | 9.5 |
| Coloring resistance ($\Delta E^*_{ab}$) | Coffee | 2.63 | 3.86 | 3.23 | 1.87 | 1.73 | 5.23 |
| | Tea | 1.72 | 1.83 | 2.36 | 0.96 | 1.30 | 3.39 |
| Crystallization | Peak temperature (°C) | 72.6 | 67.0 | 96.9 | - | - | - |
| | Half-value width (°C) | 2.6 | 5.9 | 11.4 | - | - | - |

From Tables 1 and 2, it is seen that the aliphatic-aromatic polyesters having an ester group content of 9.6 mol/kg or more and the resin compositions containing these aliphatic-aromatic polyesters in an amount of 20% by mass or more exhibit excellent coloring resistance against foods and beverages and, therefore, can be suitably used in food or beverage packaging materials, particularly food or beverage containers.

From Example 1 and Comparative Example 4, it is seen that excellent mouth-opening property can be obtained by incorporating a filler into a resin composition. From Examples 1 to 3, it is seen that superior mouth-opening property can be obtained by incorporating an aliphatic polyester into a resin composition.

Further, from the results of Examples 4 to 6 shown in Table 2 and FIG. 1, it is seen that aliphatic-aromatic polyesters having a high bio-based carbon content tend to have a small crystallization peak half-value width, a high crystallization rate, and superior coloring resistance.

## Claims

1. A biodegradable resin composition, comprising an aliphatic-aromatic polyester and a filler,

   wherein the content ratio of the aliphatic-aromatic polyester with respect to the biodegradable resin composition is 20% by mass to 99% by mass,
   the content ratio of the filler with respect to the biodegradable resin composition is 0.3% by mass to 50.0% by mass, and
   the content of ester groups in the aliphatic-aromatic polyester is 9.6 mol/kg or more.

2. The biodegradable resin composition according to claim 1, wherein the aliphatic-aromatic polyester has a glass transition temperature in a range of -27 to 0°C.

3. The biodegradable resin composition according to claim 1 or 2, comprising at least a polybutylene succinate terephthalate as the aliphatic-aromatic polyester.

4. The biodegradable resin composition according to claim 3, wherein the polybutylene succinate terephthalate has a bio-based carbon content of 50% or more as measured in accordance with ISO 16620-2.

5. The biodegradable resin composition according to claim 3, wherein a ratio of terephthalic acid-derived structural units in all dicarboxylic acid-derived structural units contained in the aliphatic-aromatic polyester is 15 to 70% by mole.

6. The biodegradable resin composition according to claim 1 or 2, further comprising an aliphatic polyester.

7. The biodegradable resin composition according to claim 1 or 2, having a bio-based carbon content of 20% or more as measured in accordance with ISO 16620-2.

8. A molded body, formed of the biodegradable resin composition according to claim 1 or 2.

9. The molded body according to claim 8, which is a food or beverage packaging material.

10. The molded body according to claim 9, wherein the food or beverage packaging material is a food or beverage container.

11. A multilayer body, comprising:

   a substrate; and
   a layer formed of the biodegradable resin composition according to claim 1 or 2.

12. The multilayer body according to claim 11, which is a food or beverage packaging material.

13. The multilayer body according to claim 12, wherein the food or beverage packaging material is a food or beverage container.

14. A polybutylene succinate terephthalate, having an ester group content of 9.6 mol/kg or more, and a bio-based carbon content of 20% or more as measured in accordance with ISO 16620-2.

15. The polybutylene succinate terephthalate according to claim 14, wherein the bio-based carbon content measured in accordance with ISO 16620-2 is 50% or more.

16. A molded body, formed of the polybutylene succinate terephthalate according to claim 14 or 15.

17. The molded body according to claim 16, which is a food or beverage packaging material.

18. The molded body according to claim 17, wherein the food or beverage packaging material is a food or beverage container.

19. A multilayer body, comprising:

   a substrate; and
   a layer formed of the polybutylene succinate terephthalate according to claim 14 or 15.

20. The multilayer body according to claim 19, which is a food or beverage packaging material.

21. The multilayer body according to claim 20, wherein the food or beverage packaging material is a food or beverage container.

**Fig. 1**

DSC (cooling)

## INTERNATIONAL SEARCH REPORT

| International application No. |
|---|
| **PCT/JP2024/019503** |

**A. CLASSIFICATION OF SUBJECT MATTER**

*C08L 67/00*(2006.01)i; *B32B 27/36*(2006.01)i; *C08G 63/183*(2006.01)i; *C08K 3/013*(2018.01)i
FI: C08L67/00; B32B27/36; C08G63/183; C08K3/013

According to International Patent Classification (IPC) or to both national classification and IPC

**B. FIELDS SEARCHED**

Minimum documentation searched (classification system followed by classification symbols)

C08L67/00; B32B27/36; C08G63/183; C08K3/013

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-156539 A (MITSUBISHI CHEMICAL CORP.) 28 August 2014 (2014-08-28) claims 1-7, paragraphs [0002], [0006]-[0007], [0023], [0035], [0048], [0085], examples 1-4 | 1-21 |
| Y | | 1-21 |
| X | JP 2014-156540 A (MITSUBISHI CHEMICAL CORP.) 28 August 2014 (2014-08-28) claims 1-7, paragraphs [0002], [0006]-[0007], [0025], [0038], [0052], [0087], examples 1-6 | 1-21 |
| Y | | 1-21 |
| Y | WO 2022/014434 A1 (MITSUBISHI CHEMICAL CORPORATION) 20 January 2022 (2022-01-20) claims 1-6, paragraphs [0009], [0108], [0110], examples 1-7 | 1-21 |
| Y | JP 2011-122144 A (NATIONAL INSTITUTE OF ADVANCED INDUSTRIAL SCIENCE AND TECHNOLOGY) 23 June 2011 (2011-06-23) claims 8-9, 20-21, paragraphs [0005],[0026], examples 1-6 | 1-21 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

23

## INTERNATIONAL SEARCH REPORT
### Information on patent family members

International application No.

**PCT/JP2024/019503**

| Patent document cited in search report | | | Publication date (day/month/year) | Patent family member(s) | Publication date (day/month/year) |
|---|---|---|---|---|---|
| JP | 2014-156539 | A | 28 August 2014 | (Family: none) | |
| JP | 2014-156540 | A | 28 August 2014 | (Family: none) | |
| WO | 2022/014434 | A1 | 20 January 2022 | US 2023/0140076 A1 claims 1-6, paragraphs [0010], [0119], [0121], examples 1-7 EP 4183822 A1 CN 115698122 A TW 202208489 A | |
| JP | 2011-122144 | A | 23 June 2011 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022014434 A1

- JP 2012504195 A